# EUROPÄISCHE PATENTSCHRIFT

(11) **EP 3 717 172 B1**
(45) Veröffentlichungstag und Bekanntmachung des Hinweises auf die Patenterteilung: **14.06.2023**
(21) Anmeldenummer: 18803599.2
(22) Anmeldetag: 08.11.2018
(51) Int. Cl.: B23K 35/02, F16B 37/06, F16B 5/08, B21J 15/02, B23K 35/30, B23K 35/32

(54) **VERBINDUNGSELEMENT ZUM UNLÖSBAREN VERBINDEN VON MINDESTENS ZWEI BAUTEILEN UND VERBUNDANORDNUNG**
CONNECTION ELEMENT FOR CONNECTING AT LEAST TWO COMPONENTS IN A NON-RELEASABLE MANNER, AND COMPOSITE ASSEMBLY
ÉLÉMENT DE LIAISON SERVANT À RELIER DE MANIÈRE INAMOVIBLE AU MOINS DEUX COMPOSANTS, ET ENSEMBLE COMPOSITE

(30) Priorität: 01.12.2017 DE 102017221681
(43) Veröffentlichungstag der Anmeldung: 07.10.2020
(73) Patentinhaber: Arnold Umformtechnik GmbH & Co. KG, 74670 Forchtenberg-Ernsbach (DE)
(72) Erfinder: FRÖHLICH, Dominik, 74639 Zweiflingen (DE); VOGEL, Georg, 74653 Ingelfingen-Eberstal (DE); PHILIPP, Andreas, 74670 Forchtenberg-Ernsbach (DE); ROMINGER, Patrick, 74626 Bretzfeld (DE); TRUETSCH, Klaus, 74632 Neuenstein (DE)
(74) Vertreter: Bals & Vogel Patentanwälte PartGmbB
(86) Internationale Anmeldenummer: PCT/EP2018/080685
(87) Internationale Veröffentlichungsnummer: WO 2019/105711

(56) Entgegenhaltungen:
- EP-A1- 1 566 234
- WO-A1-02/062518
- WO-A1-2014/036986
- DE-A1-102009 006 775
- US-A1- 2005 178 816

## Beschreibung

Die vorliegende Erfindung betrifft ein Verbindungselement zum unlösbaren Verbinden von mindestens zwei Bauteilen mittels Reibschweißen, sowie eine Verbundanordnung mit mindestens einem Verbindungselement, das mindestens zwei Bauteile mittels Reibschweißen verbindet.

In der automatisierten Fügetechnik metallischer Werkstoffe oder Bauteile stellt die Verarbeitungszeit bzw. Verarbeitungsgeschwindigkeit einen essenziellen Produktivität und Kostenfaktor dar. Die Forderung nach kürzeren Verarbeitungszeiten ist daher weit verbreitet. Diese Forderung kann aber mit technischen Randbedingungen kollidieren, wie beispielsweise einer hohen axialen Kraft auf das Fügeelement beim Fügen mittels Reibschweißen, die eine Erhöhung der Verarbeitungszeit zur Folge hat, oder mit der Forderung nach einer Reduktion der Menge von Metallspänen beim Drehen des Fügeelements.

Aus DE 10 2009 006 775 A1 ist ein Fügeelement zum Fügen zweier aneinander anliegender Werkstücke bekannt. Ein Eindringabschnitt des Fügeelements weist einen balligen Vorsprung auf mit einer Ausformung, die ein Eindringen des Fügeelements in das erste Werkstück erleichtern soll, wie beispielsweise einer ringförmigen Kante, einer Schneide oder einer spaltförmigen Aussparung.

Die Vorsprung-Ausformung des Eindringabschnitts bewirkt eine spanende Bearbeitung der Werkstücke. Mit einer solchen Bearbeitung sind Probleme verbunden, wie beispielsweise eine Erhöhung der Menge von Metallspänen beim Drehen des Fügeelements sowie eine unzureichende Festigkeit der hergestellten Verbindung.

Aus DE 10 2010 017 550 A1 ist ein Verbindungselement zum Herstellen einer Reibschweißverbindung von mindestens zwei plattenartigen Bauteilen bekannt. Das Verbindungselement weist ein gewindeartig gestaltetes Unrundprofil auf, durch welches verdrängtes Material gezielt weggeführt werden soll.

Mit einer solchen Bearbeitung sind Probleme verbunden, wie beispielsweise eine Erhöhung der Menge von Metallspänen beim Drehen des Verbindungselements sowie eine Erhöhung der Verarbeitungszeit infolge einer Erhöhung der auf das Verbindungselement einzuwirkenden und benötigten Kraft.

Es ist daher Aufgabe der vorliegenden Erfindung, die voranstehend beschriebenen Nachteile bei einem Verbindungselement bzw. Fügeelement zu beheben oder zumindest teilweise zu beheben. Insbesondere ist es Aufgabe der vorliegenden Erfindung, ein Verbindungselement zum unlösbaren Verbinden von mindestens zwei Bauteilen mittels Reibschweißen sowie eine Verbundanordnung mit mindestens einem Verbindungselement bereitzustellen, wobei eine Festigkeit der hergestellten Verbindung verbessert wird und/oder die Herstellung der Verbindung effizienter wird und vorzugsweise eine Reduktion des beim Verbinden entstehenden Materialabfalls und/oder der Verarbeitungszeit erzielt wird.

Voranstehende Aufgabe wird durch die unabhängigen Patentansprüche gelöst. Demnach wird die Aufgabe durch ein Verbindungselement zum unlösbaren Verbinden von mindestens zwei Bauteilen mittels Reibschweißen mit den Merkmalen des Anspruchs 1 und durch eine Verbundanordnung mit mindestens einem Verbindungselement, das mindestens zwei Bauteilen mittels Reibschweißen verbindet, mit den Merkmalen des Anspruchs 10 gelöst. Weitere Merkmale und Details der Erfindung ergeben sich aus den Unteransprüchen, der Beschreibung und den Zeichnungen. Dabei gelten Merkmale und Details, die im Zusammenhang mit dem Verbindungselement beschrieben sind, auch im Zusammenhang mit der Verbundanordnung und jeweils umgekehrt, sodass bezüglich der Offenbarung zu den einzelnen Erfindungsaspekten stets wechselseitig Bezug genommen wird bzw. werden kann.

Gemäß einem ersten Aspekt wird die Aufgabe gelöst durch ein Verbindungselement zum unlösbaren Verbinden von mindestens zwei, insbesondere plattenförmigen, Bauteilen mittels Reibschweißen beim Drehen des Verbindungselements um eine Längsachse des Verbindungselements. Das Verbinden ist als Fügen aufzufassen und das Verbindungselement ist ein Fügeelement oder ein Reibschweißverbindungselement.

Das Verbindungselement umfasst:
- einen entlang der Längsachse ausgebildeten Schaft mit einer Schaftstirn an einem freien Ende des Schaftes zum Penetrieren mindestens eines Bauteils, und
- einen mit dem Schaft verbundenen Kopf zum Übertragen eines Drehmoments um die Längsachse von einem Drehwerkzeug auf den Schaft.

Die Schaftstirn hat eine einem Außenbereich zugewandte Schaftstirnfläche, die eine konvexe Einhüllende und/oder eine konvexe Form aufweist. Die Einhüllende hat einen stumpfen Verlauf beziehungsweise die Schaftstirnfläche hat einen stumpfen Verlauf. Dabei weist die Schaftstirnfläche eine Mehrzahl von Vertiefungen und Erhöhungen auf, und die Schaftstirnfläche ist derart ausgestaltet, dass die Schaftstirnfläche bei dem Reibschweißen zum unlösbaren Verbinden von mindestens zwei Bauteilen kein Materialabfall erzeugt.

Vorliegend werden die Begriffe "Schaftstirn" und "Schaftstirnfläche" hinsichtlich einer Form der Schaftstirn oder der Schaftstirnfläche gleichwertig verwendet bzw. bezeichnen den gleichen Gegenstand. Darüber hinaus kann jedoch die Schaftstirn, anders als die Schaftstirnfläche, einen Innenbereich des betreffenden Gegenstands bezeichnen. Sofern auf einen Verlauf der Schaftstirnfläche Bezug genommen wird, so ist damit ein räumlicher 2D-Verlauf bezeichnet.

Die Einhüllende der Schaftstirnfläche ist als eine Fläche zu verstehen, welche die Schaftstirnfläche einhüllt und deren Punkte relative Maxima der Schaftstirnfläche miteinander verbinden. Ein relatives Maximum der Schaftstirnfläche ist vorzugsweise eine bergförmige oder hügelförmige Erhöhung der Schaftstirnfläche, wobei die Schaftstirnfläche eine Vielzahl relativer Maxima aufweisen kann. Die relativen Maxima sind vorzugsweise Stützstellen einer 2D-Interpolationsfläche, wobei vorzugsweise die Interpolation linear oder durch Splines gebildet ist. Die 2D-Interpolationsfläche verbindet vorzugsweise die relativen Maxima bzw. Stützstellen miteinander und kann auf diese Weise die Einhüllende bilden.

Die Einhüllende der Schaftstirnfläche ist dann konvex, wenn in einer Schnittebene durch die Einhüllende diese durch eine konvexe Funktion darstellbar ist. Die Schnittebene ist vorzugsweise eine Längsschnittebene umfassend die Längsachse oder eine Querschnittebene senkrecht zur Längsachse. Eine Funktion ist dann konvex, wenn die folgenden Bedingungen für den gesamten Bereich der Funktion erfüllt sind:
- ein Linienabschnitt zwischen zwei beliebigen Punkten im Graphen der Funktion liegt oberhalb des Graphen, also in einem Innenbereich der Schaftstirn bzw. der Einhüllenden, und
- die zweite Ableitung der Funktion ist größer als Null.

Eine Fläche, vorzugsweise die Schaftstirnfläche oder deren Einhüllende, hat dann einen stumpfen Verlauf, wenn sie nicht spitz oder nicht kantig oder nicht scharfkantig ausgebildet ist. Vorzugsweise hat eine Fläche dann einen stumpfen Verlauf, wenn in der Längsschnittebene oder Querschnittebene die Fläche durch eine stetige Funktion dargestellt oder darstellbar ist, deren erste Ableitung zwischen den Rändern der Funktion durchgehend stetig ist.

Eine Fläche mit einem stumpfen Verlauf kann als eine stumpfe Fläche aufgefasst werden. Eine Schaftstirnfläche mit einem Vorsprung, der eine ringförmige Kante, eine Schneide oder eine spaltförmigen Aussparung aufweist, ist als kantig bzw. scharfkantig anzusehen, und hat nicht einen stumpfen Verlauf. Insbesondere die Einhüllende einer solchen Schaftstirnfläche hat nicht einen stumpfen Verlauf.

Gemäß einem zweiten Aspekt wird die Aufgabe gelöst durch eine Verbundanordnung umfassend mindestens zwei Bauteile und mindestens ein erfindungsgemäßes Verbindungselement, gemäß dem ersten Aspekt, durch welches die Bauteile mittels Reibschweißung unlösbar verbunden sind.

Die Bauteile sind vorzugsweise plattenförmig und/oder blechförmig. Die Bauteile können allerdings auch anders ausgebildet sein. So kann beispielsweise ein erstes Bauteil, das als erstes von dem Verbindungselement durchdrungen wird, plattenförmig sein. Ein zweites Bauteil, auf welches das erste Bauteil plan aufgesetzt und durch das Verbindungselement verbunden wird, kann quaderförmig oder würfelförmig sein oder kann beliebig geformt sein, sofern es eine bereichsweise ebene Oberfläche aufweist, an welcher das erste Bauteil anliegen kann.

Beim Herstellen der Verbindung kann das Verbindungselement zunächst durch Rotation und axialen Druck in mindestens ein erstes Bauteil hineingedreht, durch dieses hindurchbewegt und in ein darauf folgendes Bauteil eingedrückt werden, ohne es zu durchdringen. Durch die beim Eindrehen und Eindrücken entstehende Reibung werden das Verbindungselement und das kontaktierte, umliegende Bauteile-Material heiß, wodurch das Bauteile-Material umformbar wird, und von dem vordringenden Verbindungselement verdrängt wird, sodass das Verbindungselement mit den entsprechenden Bauteilen stoffschlüssig verbunden wird, während die Bauteile in Anlage aneinander gehalten sind.

Die Ausformung der Verbindungselement-Fläche, welche die Bauteile kontaktiert, sich an ihnen reibt, erweicht, zum Umformen bringt und penetriert, insbesondere die Ausformung der Schaftstirnfläche und/oder einer Schaft-Außenfläche des eindringenden Schaft-Bereichs, ist maßgeblich verantwortlich für die Erzeugung der Reibung zwischen dem Verbindungselement und den Bauteilen und somit für die Effizienz der Reibschweißung. Das Merkmal, wobei die Schaftstirnfläche i) eine konvexe Form mit einem stumpfen Verlauf und/oder ii) eine konvexe Einhüllende mit einem stumpfen Verlauf aufweist, bewirkt vorteilhafterweise
- während der Herstellung der Verbindung bedingt durch die Flächenstrukturen bzw. Flächenformen, welche eine Erhöhung der Reibung bewirken, ein höherer Wärmeeintrag beim Kontakt zwischen Schaftstirnfläche und dem zu verschweißenden Bauteil erfolgt, wodurch eine Reduzierung der Prozesszeit erzielt wird.
- eine Reduktion des beim Herstellen der Verbindung entstehenden Materialabfalls, weil durch das Fehlen von Kanten, insbesondere scharfer Kanten, oder von Spitzen, eine Erzeugung von Spänen beim Eindrehen des Verbindungselements vermieden wird, und
- eine verbesserte Festigkeit der hergestellten Verbindung, weil das verdrängte Bauteile-Material nicht in Form umherfliegender Späne ausgeworfen, sondern in Form von Material mit abgesenkter Fließspannung erzeugt wird, welches nach dem Abkühlen die Verbindung zwischen dem Verbindungselement und den Bauteilen festigt.

In einer bevorzugten Weiterbildung der Erfindung hat die Schaftstirnfläche eine stumpfe Flächenform, die eine von einem Kugelschalensegment abweichende Flächenstruktur mit reibungserhöhenden Elementen aufweist. Die Schaftstirnfläche umfasst vorzugsweise mindestens eines der folgenden reibungserhöhenden Elemente:
- Die Schaftstirnfläche weist eine Mehrzahl von Vertiefungen und Erhöhungen auf in Form von Bergen, Hügeln und Tälern, die gleichmäßig oder gegebenenfalls ungleichmäßig verteilt sind.
- Die Schaftstirnfläche ist golfballartig ausgebildet. Der Begriff golfballartig beschreibt eine Flächenstruktur (Golfballstruktur) mit Vertiefungen und Erhöhungen, die vorzugsweise eine, als ein Kugelschalensegment ausgebildete, Einhüllende haben kann. Die Vertiefungen und Erhöhungen können beispielsweise gleichmäßig ausgebildet sein und/oder sich periodisch wiederholen.
- Die Schaftstirnfläche hat in der Längsschnittebene und/oder der Querschnittebene einen wellenförmigen Umriss. Ein wellenförmiger Umriss kann eine Sinusform, oder eine Sägezahnform (Dreiecksform) mit abgeschnittenen oder stumpfen Ecken, oder eine Rechteckform mit abgeschnittenen oder stumpfen Ecken umfassen.

Die beschriebenen Flächenstrukturen bzw. Flächenformen bewirken eine Erhöhung der Reibung bzw. des Reibungskoeffizienten zwischen der Schaftstirnfläche und den Bauelementen. Die stärkere Reibung bewirkt wiederum eine erhöhte Wärmeentwicklung an der Kontaktfläche bzw. Reibfläche und/oder einen stärkeren Abrasionseffekt und kann vorteilhafter Weise das Vordringen des Verbindungselements erleichtern und eine erhöhte Effizienz der Reibschweißung sowie eine Reduktion der Verarbeitungszeit bzw. der Taktzeit bewirken, ohne dass dabei Materialabfall, beispielsweise Späne, erzeugt wird.

In einer bevorzugten Weiterbildung der Erfindung hat die Einhüllende der Schaftstirnfläche in der Längsschnittebene einen runden oder bogenförmigen Umriss. Damit wird vorteilhafterweise eine Reduktion des beim Herstellen der Verbindung entstehenden Materialabfalls bewirkt, weil durch das Fehlen von Kanten, insbesondere scharfer Kanten, oder von Spitzen, eine Erzeugung von Spänen beim Eindrehen des Verbindungselements vermieden wird.

Insgesamt ist durch die runde bzw. stumpfe Formgebung der in die Bauteile eindringenden Abschnitte des Verbindungselements, einschließlich der Schaftstirnfläche und der Außenfläche des Formbereichs sowie der in diesen Abschnitten vorgesehenen reibungserhöhenden Elementen, gewährleistet, dass eine erhöhte Reibung und folglich eine erhöhte Effizienz der Reibschweißung bewirkt werden und zugleich ein Verhaken der eindringenden Abschnitte vermieden wird.

Gemäß einer weiteren bevorzugten Weiterbildung der Erfindung ist die Einhüllende der Schaftstirnfläche um die Längsachse rotationssymmetrisch ausgebildet und/oder hat in der Querschnittsebene einen kreisförmigen Umriss. Damit können vorteilhafterweise die Herstellung erleichtert und die Herstellkosten gesenkt werden (ein rotationssymmetrisches Element ist einfacher und billiger herstellbar als ein nicht rotationssymmetrisches Element).

In einer weiteren bevorzugten Weiterbildung der Erfindung hat die Einhüllende der Schaftstirnfläche in der Längsschnittebene einen kreisförmigen oder parabelförmigen oder ellipsenförmigen Umriss. Im Zusammenspiel mit der rotationssymmetrischen Form hat ein derartiger Umriss den vorteilhaften Effekt einer guten Reibung bei gleichzeitiger Vermeidung von Materialabfall, wobei zugleich die Herstellung leicht ist und die Herstellkosten niedrig sind.

Gemäß einer bevorzugten Weiterbildung der Erfindung umfasst der Schaft mindestens zwei Abschnitte einschließlich eines von dem freien Ende des Schaftes ausgehenden Formabschnitts und eines von dem Kopf des Schaftes ausgehenden Halteabschnitts. Der Halteabschnitt bildet einen oberen Teil des Schafts, welcher den Kopf hält, und der Formabschnitt bildet einen unteren Teil des Schafts, der an die Schaftstirn anschließt und zusammen mit der Schaftstirn zur Erzeugung einer erhöhten Reibung zwischen Verbindungselement und Bauteilen und damit zu einer erhöhten Reibschweißwirkung beiträgt.

In einer bevorzugten Weiterbildung der Erfindung weist der Formabschnitt in der Querschnittebene einen polygonförmigen, d. h. mehreckigen oder vieleckigen, Umriss mit abgerundeten Ecken auf, wobei vorzugsweise die Strecken zwischen den Ecken i) gleich lang sind, um eine gleichmäßige Drehbewegung beim Reibschweißen zu bewirken, und/oder ii) bereichsweise gerade und/oder gekrümmt sind, um eine erhöhte Reibung zwischen Verbindungselement und Bauteilen bei gleichzeitiger Abfallvermeidung zu bewirken.

Gemäß einer weiteren bevorzugten Weiterbildung der Erfindung weist der polygonförmige Umriss des Formabschnitts mindestens drei, vier oder sechs Ecken auf. Damit wird vorteilhafterweise eine erhöhte Reibung zwischen Verbindungselement und Bauteilen bei gleichzeitiger Abfallvermeidung und niedrigen Herstellungskosten für das Verbindungselement bewirkt.

In einer bevorzugten Weiterbildung der Erfindung ist eine Außenfläche des Formabschnitts bereichsweise eben ausgebildet, wobei vorzugsweise die Außenfläche des Formabschnitts mindestens drei ebene oder näherungsweise ebene Flächenabschnitte umfasst. Eine näherungsweise ebene Form ist als eine leicht gewölbte Form aufzufassen, die nur geringfügig von der ebenen Form abweicht. Damit wird vorteilhafterweise ein stumpfer Verlauf der Außenfläche bzw. Kontaktfläche und zugleich eine erhöhte Reibung zwischen Verbindungselement und Bauteilen bei gleichzeitiger Abfallvermeidung bewirkt.

Bei einer bevorzugten Weiterbildung der Erfindung ist der Formabschnitt zylinderförmig oder näherungsweise zylinderförmig ausgebildet. Hierbei ist als zylinderförmig eine Form aufzufassen, bei welcher in einer Längsschnittebene der Umriss des Formabschnitts parallel oder näherungsweise parallel zur Längsachse verläuft, wobei gegebenenfalls der Formabschnitt nicht zwingend rotationssymmetrisch gegenüber der Längsachse sein muss.

Ferner, gemäß einer bevorzugten Weiterbildung der Erfindung hat der Formabschnitt in der Querschnittebene einen Umriss, der bereichsweise bogenförmig oder geradlinig ist. Vorzugsweise hat der Formabschnitt in der Querschnittebene einen Umriss, der bereichsweise abwechselnd geradlinig und bogenförmig ist. Die weitgehend runde Form, die dennoch von einer kreisrunden Form abweicht, kann vorteilhafterweise eine erhöhte Reibung bei gleichzeitiger Reduktion des beim Herstellen der Verbindung entstehenden Materialabfalls bewirken.

Bei einer bevorzugten Weiterbildung der Erfindung ist die Außenfläche des Formabschnitts um die Längsachse in Umfangsrichtung profiliert und weist insbesondere radiale Rillen, Kerben oder Vertiefungen auf. Ein derartiges Profil ist in der Querschnittsebene durch entsprechende radiale Verlaufsschwankungen der Umlaufkontur gekennzeichnet. Die Profilierung einschließlich Vertiefungen jeglicher Art weist vorzugsweise in der Querschnittsebene eine abgerundete Form bzw. Kontur auf. Die weitgehend runde Form, welche dennoch reibungserhöhende Elemente aufweist, kann vorteilhafterweise eine erhöhte Reibung bei gleichzeitiger Reduktion des beim Herstellen der Verbindung entstehenden Materialabfalls bewirken.

Alternativ ist die Außenfläche des Formabschnitts vorzugsweise um die Längsachse in Umfangsrichtung glatt ausgebildet. Damit kann eine zusätzliche Reduktion des beim Herstellen der Verbindung entstehenden Materialabfalls und/oder eine gleichmäßige Kraftübertragung über die Außenfläche des Formabschnitts und eine zuverlässige Reibschweißverbindung bei kurzen Taktzeiten erzielt werden.

Gemäß einer weiteren bevorzugten Weiterbildung der Erfindung ist die Außenfläche des Formabschnitts tripolygonal ausgebildet. Hierbei bedeutet tripolygonal insbesondere, dass die Außenfläche des Formabschnitts drei Polygonflächen, vorzugsweise vier Eckflächen oder Rechteckflächen, umfasst. Damit wird vorteilhafterweise ein Walgen in dem ersten Bauelement und damit eine erhöhte Reibungswärme und ein verbessertes Eindrehverhalten des Verbindungselements bewirkt. Ferner kann bevorzugt vorgesehen sein, dass das Verbindungselement, ausgeschossen die Spitze, d.h. die Schaftstirnfläche, galvanisch beschichtet ist.

In einer bevorzugten Weiterbildung der Erfindung ist eine Außenfläche des Halteabschnitts zylinderförmig oder näherungsweise zylinderförmig oder konisch und insbesondere glatt ausgebildet. Damit wird vorteilhafterweise eine Erleichterung beim Eindrehen bzw. Eindringen des Verbindungselements und bei der Weiterleitung des plastifizierten Bauteile-Materials bewirkt.

Ferner, gemäß einer bevorzugten Weiterbildung der Erfindung ist ein Übergang zwischen i) der Schaftstirnfläche und der Außenfläche des Formabschnitts und/oder ii) zwischen dem Formabschnitt und dem Halteabschnitt abgerundet ausgebildet. Das bewirkt ergänzend eine abgerundete bzw. stumpfe Formgebung der in die Bauteile eindringenden Abschnitte des Verbindungselements. Damit ist vorteilhafter Weise sichergestellt, dass an dem betreffenden Bereich der Schaft-Außenfläche keine Kanten oder Spitzen vorhanden sind.

In einer bevorzugten Weiterbildung der Erfindung weist eine dem Schaft zugewandte Unterseite des Kopfes eine umlaufende Nut auf. Diese Bauweise entspricht einer Hohlkehle und ermöglicht es vorteilhafterweise bei der Verbindungsherstellung verdrängtes beziehungsweise umgeformtes Bauteile-Material aufzunehmen, sodass ein Außenrand an der Unterseite des Kopfes flächig auf dem oberen der miteinander verbundenen Bauteile aufliegt und die entstandene Reibschweißverbindung zusätzlich gegen eindringende Feuchtigkeit abdichtet.

In einer weiteren bevorzugten Weiterbildung der Erfindung weist eine dem Schaft abgewandte Oberseite des Kopfes einen Drehmomentkoppler zum Übertragen des Drehmoments von dem Drehwerkzeug auf den Kopf des Verbindungselements beim Reibschweißen auf. Vorzugsweise weist der Drehmomentkoppler radialer Nuten, Einbuchtungen oder Erhebungen auf. Damit werden vorteilhafterweise eine effiziente Drehmomentübertragung auf den Kopf sowie eine einfache und kosteneffiziente Herstellung des gesamten Verbindungselements ermöglicht. Ein derart ausgebildeter Drehmomentkoppler ist besonders für eine automatisierte Anwendung geeignet, weil das Drehwerkzeug beim Absinken auf den Kopf des Verbindungselements nicht besonders präzise positioniert werden muss, um eine effektive Drehmomentübertragung auf das Verbindungselement zu bewirken.

In einer bevorzugten Weiterbildung der Erfindung ist das Verbindungselement aus einer Stahllegierung ausgebildet, vorzugsweise aus einem Schrauben-Vergütungsmaterial, oder aus einem mangan- und/oder borhaltigen Stahl, insbesondere 20MnB4, 23MnB4 oder 22MnB5. Alternativ ist das Verbindungselement aus einer Ti-Legierung hergestellt. Insbesondere weist das Verbindungselement ein martensitisches Gefüge auf. Das Verbindungselement weist alternativ ein austenitisches Gefüge auf, das bekanntlich eine hohe Festigkeit hat. Die Oberfläche des Verbindungselements ist vorzugsweise gehärtet, beispielsweise durch Aufkohlen, wodurch eine besonders widerstandsfähige Penetrationsschicht entsteht.

Bevorzugt ist ferner ein Verbindungselement, welches eine Oberflächenbeschichtung aufweist. Diese ist vorzugsweise mittels einer Galvanisierung, oder durch einen Chemisch-Nickel-Prozess, durch Plasmaspritzen, kinetisches Kaltgaskompaktieren, Flammspritzen, Hartverchromen, oder durch physikalische Gasphasenabscheidung aufgebracht. Für eine besonders hohe Härte umfasst das Verbindungselement zumindest bereichsweise hochkohlenstoffhaltigem Stahl, insbesondere mit zementitischem Gefüge.

Gemäß einer weiteren bevorzugten Weiterbildung der Erfindung ist zumindest die Schaftstirnfläche, gegebenenfalls auch der Schaft einschließlich Formbereich und Haltebereich, galvanisch verzinkt, wobei vorzugsweise eine Schicht eines Materials umfassend Zink oder eine Zink-Nickel Verbindung zumindest auf die Schaftstirnfläche elektrochemisch aufgetragen ist. Damit kann vorteilhafterweise eine besonders harte bzw. widerstandsfähige Schicht auf der Schaftstirnfläche und/oder dem Formbereich erzeugt werden. Idealerweise ist das komplette Verbindungselement vollständig galvanisch beschichtet. Eine blanke Spitze, d.h. eine Schaftstirnfläche, die nicht galvanisch beschichtet ist, ermöglicht ebenfalls eine prozesssichere Verschweißung.

In einer bevorzugten Weiterbildung der Erfindung ist eine Länge des Formabschnitts etwa zwei bis dreimal kleiner als eine Länge des Schafts. Damit können vorteilhafterweise kurze Taktzeiten beim Reibschweißen erzielt werden, wobei eine zuverlässige Abdichtung durch den Halteabschnitt mit kreisrundem Querschnitt gewährleistet ist.

Nach einer bevorzugten Weiterbildung der Erfindung ist ein jeweiliges Bauteil aus einem Metall oder einer Metalllegierung ausgebildet. Damit wird vorteilhafterweise das Reibschweißen überhaupt ermöglicht.

Gemäß einer weiteren bevorzugten Weiterbildung der Erfindung ist mindestens eines der Bauteile, insbesondere mindestens ein erstes von dem Verbindungselement durchdrungenes Bauteil, aus einem Material ausgebildet, das ein nicht eisenhaltiges Metall, vorzugsweise Kupfer, Aluminium oder Messing umfasst und/oder eine gegenüber dem Verbindungselement geringere Materialhärte aufweist. Ebenso bevorzugt ist es, wenn mindestens eines der Bauteile aus Kunststoff, insbesondere aus thermoplastischem oder duroplastischem Kunststoff, ausgebildet ist. Damit wird vorteilhafterweise das Eindringen des Verbindungselements in die Bauteile erleichtert, das Reibschweißen kann effizient gestaltet werden und Taktzeiten können verkürzt werden.

In einer bevorzugten Weiterbildung der Erfindung sind die Bauteile jeweils als Metallbleche oder Metallplatten ausgebildet. Vorzugsweise können die Bauteile jeweils ungelocht sein oder können Löcher aufweisen, die einen geringeren Durchmesser haben als i) der größte Durchmesser des Formabschnitts und/oder ii) der Durchmesser des Halteabschnitts. Damit wird vorteilhafterweise bewirkt, dass ein beim Reibschweißen entstandenes und/oder durch das Verbindungselement ausgefülltes Loch nach Fertigstellen der Reibschweißverbindung zuverlässig durch den vom Kopf ausgehenden Halteabschnitt des Schafts abgedichtet wird. Hierzu kann der Halteabschnitt einen größeren Durchmesser aufweisen als ein maximaler Durchmesser des Formabschnitts.

Nach einer bevorzugten Weiterbildung der Erfindung hat das Material des mindestens einen ersten Bauteils eine geringere Härte als das Material der übrigen Bauteile. Damit wird vorteilhafterweise das Eindringen des Verbindungselements in die Bauteile erleichtert, das Reibschweißen kann effizient gestaltet werden und Taktzeiten können verkürzt werden.

Ferner, nach einer bevorzugten Weiterbildung der Erfindung ist mindestens eines der nicht als erstes Bauteil angeordneten Bauteile aus Stahl ausgebildet. Damit wird vorteilhafterweise eine erhöhte Festigkeit der Verbundanordnung bewirkt, wobei das Vordringen des Verbindungselements beim Reibschweißen trotzdem nicht behindert oder beeinträchtigt wird.

Gemäß einer bevorzugten Weiterbildung der Erfindung ist eine Gesamtdicke der Bauteile höchstens so groß wie eine Länge, d. h. axiale Ausdehnung, des Haltebereichs des Verbindungselements. Damit wird vorteilhafterweise eine vollständige Durchdringung der Bauteile durch das Verbindungselement gewährleistet falls der vordere Bereich des Verbindungselements einschließlich Schaftstirn und Formabschnitt beim Reibschweißen abgeschliffen wird bzw. abschmilzt.

Erfindungsgemäße Verbindungselemente werden nachfolgend anhand von Zeichnungen näher erläutert. Es zeigen jeweils schematisch:
- Figur 1: eine erste Ausführungsform des Verbindungselements in einer Seitenansicht,
- Figur 2: eine erste Ausführungsform des Verbindungselements in einer Draufsicht,
- Figur 3: eine erste Ausführungsform des Verbindungselements in einer Untersicht,
- Figur 4-7: die Herstellungsschritte einer Verbundanordnung mit zwei Bauteilen und einem Verbundelement mittels Reibschweißen,
- Figur 8: die erste Ausführungsform des Verbindungselements in einer Längsschnittebenen-Schnittansicht durch die Schaftstirn,
- Figur 9: die erste Ausführungsform des Verbindungselements in einer Querschnittsebenen-Schnittansicht durch die Schaftstirn,
- Figur 10: eine zweite Ausführungsform des Verbindungselements in einer Querschnittsebenen-Schnittansicht durch die Schaftstirn,
- Figur 11: eine dritte Ausführungsform des Verbindungselements in einer Seitenansicht,
- Figur 12: eine dritte Ausführungsform des Verbindungselements in Querschnittsebenen-Schnittansichten durch den Halteabschnitt und den Formabschnitt, und
- Figur 13: eine dritte Ausführungsform des Verbindungselements in einer Längsschnittebenen-Schnittansicht.

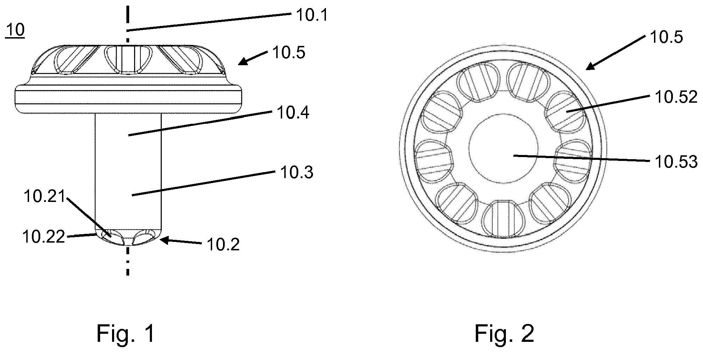

Elemente mit gleicher Funktion und Wirkungsweise sind in den gezeigten Figuren 1 bis 13 jeweils mit denselben Bezugszeichen versehen.

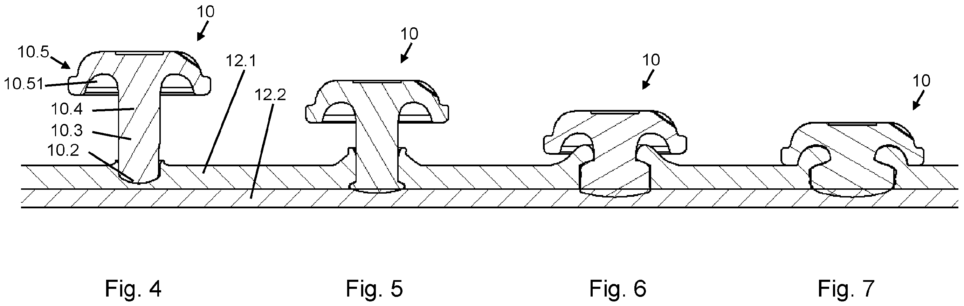

Fig. 1 zeigt eine erste Ausführungsform des Verbindungselements 10, das zum unlösbaren Verbinden von zwei Bauteilen 12.1,12.2 mittels Reibschweißen, das in den Fign. 4-7 gezeigt ist, beim Drehen des Verbindungselements 10 um eine Längsachse 10.1 des Verbindungselements 10.

Das Verbindungselement 10 umfasst:
- einen entlang der Längsachse 10.1 ausgebildeten Schaft 10.2-10.4 mit einer Schaftstirn 10.2 an einem freien Ende des Schaftes 10.2-10.4 zum Durchdringen eines Bauteils 12.1, und
- einen mit dem Schaft 10.2-10.4 verbundenen Kopf 10.5 zum Übertragen eines Drehmoments um die Längsachse 10.1 von einem Drehwerkzeug auf den Schaft 10.2-10.4.

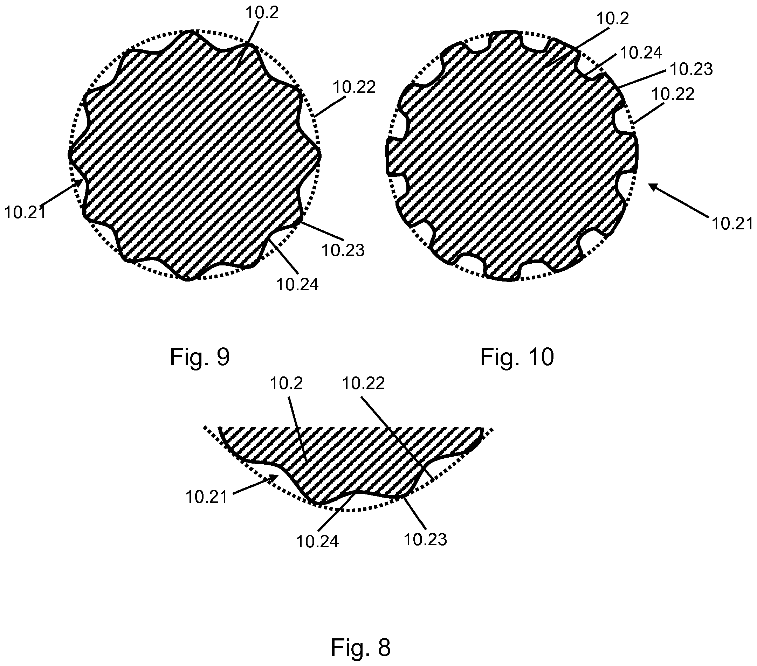

Die Schaftstirn 10.2 hat eine Schaftstirnfläche 10.21, die eine konvexe Einhüllende 10.22 mit einem stumpfen Verlauf aufweist. Die Einhüllende 10.22 der Schaftstirnfläche 10.21 ist als eine Fläche zu verstehen, welche die Schaftstirnfläche 10.21 einhüllt und deren Punkte relative Maxima der Schaftstirnfläche 10.21 (siehe Fig. 8-10) miteinander verbindet. Die relativen Maxima bilden Stützstellen einer die relativen Maxima bzw. Stützstellen verbindenden 2D-Interpolationsfläche, welche die Einhüllende 10.22 darstellt.

In der in Fig. 1 gezeigten Vorderansicht des Verbindungselements 10 stimmt die Einhüllende 10.22 mit einer Kontur der Schaftstirnfläche 10.21 überein. Demgegenüber, in den in Fig. 8 und 9 gezeigten Schnittansichten durch die Schaftstirn 10.2, unterscheidet sich die Einhüllende 10.22 von der Kontur 10.21 der Schaftstirn 10.2 und ist damit deutlich erkennbar.

In der in Fig. 2 gezeigten Draufsicht des Verbindungselements 10 ist der Kopf 10.5 erkennbar, wobei eine dem Schaft 10.2-10.4 abgewandte Oberseite des Kopfes 10.5 in ihrer Mitte eine kreisförmige ebene Druckfläche 10.53 und außen herum einen Drehmomentkoppler 10.52 aufweist zum Übertragen des Drehmoments von einem Drehwerkzeug auf den Kopf 10.5 beim Reibschweißen. Vorliegend umfasst der Drehmomentkoppler radiale Nuten bzw. Einbuchtungen 10.52, in welche ein entsprechendes Gegenstück des Drehwerkzeugs (nicht gezeigt), beispielsweise radiale Vorsprünge einer Stirn des Drehwerkzeugs, mit dem Drehmomentkoppler zusammenwirkt bzw. in die radiale Nuten eingreift beim axialen Absenken des Drehwerkzeugs zum Drehen des Verbindungselements 10. Zum axialen Drücken auf das Verbindungselement 10 ist die ebene Druckfläche 10.53 vorgesehen.

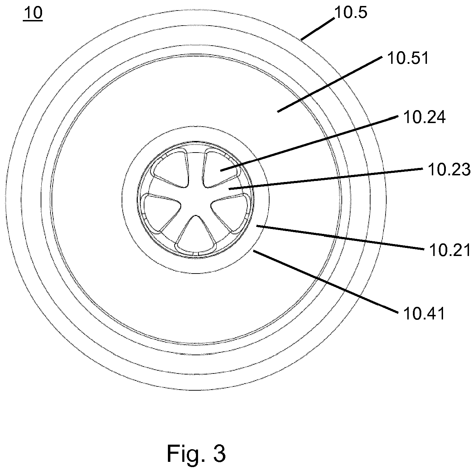

In der in Fig. 3 gezeigten Untersicht des Verbindungselements 10 ist die Schaftstirnfläche 10.21 erkennbar, die Wellenberge bzw. Erhöhungen 10.23 und Wellentäler bzw. Vertiefungen 10.24 aufweist, die reibungserhöhende Elemente der Schaftstirnfläche 10.21 bilden.

Die Schaftstirnfläche 10.21, beispielhaft dargestellt in Fig. 8, 9, hat insofern einen stumpfen Verlauf, als dass sie nicht spitz und nicht kantig ausgebildet ist. Anders ausgedrückt, die Schaftstirnfläche 10.21 ist in der Längsschnittebene (Fig. 8) oder Querschnittebene (Fig. 9) durch eine stetige Funktion darstellbar bzw. dargestellt, deren erste Ableitung zwischen den Rändern der Funktion, welche auch Ränder der Schaftstirnfläche 10.21 sind, durchgehend stetig ist.

Fig. 8 zeigt in einer Längsschnittebenen-Schnittansicht durch die Schaftstirn 10.2 eine erste Ausformung der Schaftstirnfläche 10.21 mit reibungserhöhenden Elementen. Hierbei ist erkennbar, dass die Kontur 10.21 der Schaftstirn 10.2 eine Mehrzahl von Erhöhungen bzw. Wellenberge 10.23 und von Vertiefungen bzw. Wellentälern 10.24 aufweist, die gleichmäßig verteilt sind. In Fig. 9, in welcher in einer Querschnittsebenen-Schnittansicht durch die Schaftstirn 10.2 die Kontur der Schaftstirn 10.2 bzw. die Schaftstirnfläche 10.21 gezeigt ist, sind ähnliche reibungserhöhende Elemente (gleichmäßig verteilte Erhöhungen 10.23 und Vertiefungen 10.24) erkennbar. Generell hat die Schaftstirn 10.2 in Schnittansichten durch die Schaftstirn 10.2 eine wellenförmige Kontur 10.21, wobei eine Höhe bzw. Amplitude der Welle in den vorliegenden Figuren zu Anschauungszwecken übertrieben, d. h. größer als gemäß einem realen Maßstab, dargestellt ist.

Fig. 10 zeigt in einer Längsschnittebenen-Schnittansicht durch die Schaftstirn 10.2 eine weitere Ausformung der Schaftstirnfläche 10.21 mit reibungserhöhenden Elementen. In dieser Ausformung weist die Kontur 10.21 der Schaftstirn 10.2 einen wellenförmigen Verlauf mit einer Rechteckform auf, wobei die Ecken abgeschnitten bzw. stumpf sind.

Die in Fig. 8-10 gezeigten Ausführungsformen des Verbindungselements 10 entfalten einen wesentlichen Reibschweiß-Effekt durch den stumpfen Verlauf der Schaftstirnfläche 10.21 und/oder der Einhüllenden 10.22 in Verbindung mit der Schaftstirn 10.2, die eine Flächenstruktur mit reibungserhöhenden Elementen 10.23,10.24 aufweist. Ein ähnlicher Effekt (Reibung, Erhitzung, Materialschmelzung, keine Abfallerzeugung) wird auch durch eine (nicht gezeigte) Golfballstruktur der Schaftstirnfläche 10.21 erzeugt.

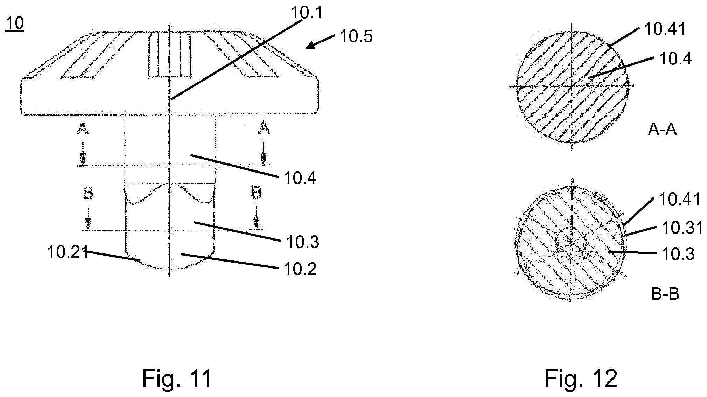

In der in Fig. 11 gezeigten Seitenansicht des Verbindungselements 10 ist erkennbar, dass der Schaft 10.2-10.4 einen von dem freien Ende des Schaftes ausgehenden Formabschnitt 10.3 und einen von dem Kopf 10.5 des Schafts ausgehenden Halteabschnitt 10.4 umfasst. Der Halteabschnitt 10.4 bildet somit einen oberen Teil des Schafts, welcher den Kopf 10.5 hält, und der Formabschnitt 10.3 bildet einen unteren Teil des Schafts, der an die Schaftstirn 10.2 anschließt und zusammen mit der Schaftstirn 10.2 zur Erzeugung einer erhöhten Reibung zwischen Verbindungselement 10 und Bauteilen 12.1,12.2 und damit zu einer erhöhten Reibschweißwirkung beiträgt.

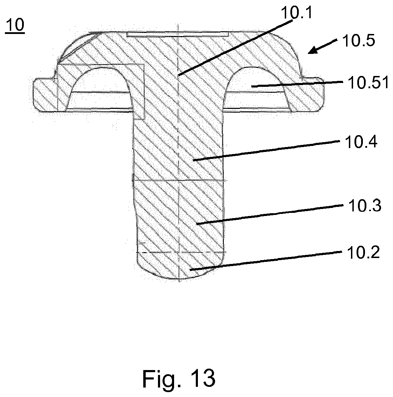

Die in Fig. 11, 13 gezeigte Schaftstirn 10.2 hat eine stumpfe Schaftstirnfläche 10.21 ohne eine wellenartige Ausformung, jedoch mit einer feinkörnigen, reibungserhöhenden Flächenstruktur, welche den gewünschten Effekt einer verbesserten Reibschweißung erzeugt.

Der in Fig. 11 gezeigte Halteabschnitt 10.4 weist einen größeren Durchmesser auf als ein maximaler Durchmesser des Formabschnitts 10.3. Damit wird vorteilhafterweise bewirkt, dass ein beim Reibschweißen in dem ersten Bauteil 12.1 entstandenes oder verbreitetes Loch (durchgehende Bohrung) oder in dem zweiten Bauteil 12.2 entstandene Anbohrung nach Fertigstellen der Reibschweißverbindung zuverlässig durch den vom Kopf 10.5 ausgehenden Halteabschnitt 10.4 abgedichtet wird. Im Unterschied dazu hat das in Fig. 1 gezeigte Verbindungselement 10 einen Schaft 10.2-10.4, bei welchem der Formabschnitt 10.3 und der Halteabschnitt 10.4 sich nicht oder nur unwesentlich voneinander unterscheiden.

In den in Fig. 12 gezeigten Querschnittsebenen-Schnittansichten durch den Halteabschnitt 10.4 (Schnitt A-A) und durch den Formabschnitt 10.3 (Schnitt B-B) ist erkennbar, dass der Halteabschnitt 10.4 einen Querschnitt mit kreisförmiger Kontur 10.41 hat und der Formabschnitt 10.3 einen Querschnitt mit einer Kontur 10.31 hat, die nicht kreisförmig sondern leicht wellenförmig ist. Die Querschnitt-Kontur 10.31 des Formabschnitts 10.3 ist reibungserhöhend und bewirkt damit eine Verbesserung der Reibschweißung und Verkürzung der Taktzeiten. Zudem ist erkennbar, dass der größte Durchmesser der Formabschnitt-Kontur 10.31 größer als der Durchmesser der Halteabschnitt-Kontur 10.41 ist. Dadurch liegt nach dem Herstellen einer Reibschweißverbindung der Außenumfang des Halteabschnitts 10.3 flächig an einer Brandung eines in dem oberen Bauteil 12.1 hergestellten Lochs an und sorgt dadurch für eine sichere Abdichtung der hergestellten Reibschweißverbindung.

In der in Fig. 13 gezeigten Längsschnittebenen-Schnittansicht durch das Verbindungselement 10 ist die Gesamtstruktur des Verbindungselements 10 erkennbar. Der entlang der Längsachse 10.1 ausgebildeten Schaft 10.2-10.4 weist eine gewölbte und stumpfe Schaftstirn 10.2 und ist mit einem Kopf 10.5 verbunden. Der Schaft 10.2-10.4 weist in einem unteren, mit der Schaftstirn 10.2 verbundenen Teil einen Formbereich 10.3 und in einem oberen, mit dem Kopf 10.5 verbundenen Teil einen Haltebereich 10.4 auf. Eine dem Schaft 10.2-10.4 zugewandte Unterseite des Kopfes 10.5 weist eine umlaufende Nut 10.51 auf. Diese Bauweise entspricht einer Hohlkehle und ermöglicht es vorteilhafterweise beim Reibschweißen aufgeschmolzenes Bauteile-Material aufzunehmen, sodass ein Außenrand an der Unterseite des Kopfes 10.5 flächig auf dem oberen 12.1 der miteinander verbundenen Bauteile 12.1, 12.2 aufliegt und die entstandene Reibschweißverbindung zusätzlich gegen eindringende Feuchtigkeit abdichtet.

Bei dem in den Fign. 4-7 dargestellten Herstellen der Verbindung wird das Verbindungselement 10 zunächst durch Rotation und axialen Druck in ein erstes Bauteil 12.1 hineingedreht (Fig. 4), das aus Aluminium besteht, durch dieses hindurchbewegt und in ein darauf folgendes, zweites Bauteil 12.2 aus Stahl eingedrückt ohne es zu durchdringen (Fig. 5). Durch die beim Eindrehen und Eindrücken entstehende Reibung werden das Verbindungselement 10 und das kontaktierte, umliegende Bauteile-Material heiß, wodurch die Fließspannung des Bauteile-Materials abgesenkt wird und das Material von dem Verbindungselement 10 verdrängt wird (Fig. 6), sodass das Verbindungselement 10 mit den Bauteilen 12.1,12.2 stoffschlüssig verbunden wird, während die Bauteile 12.1,12.2 in Anlage aneinander gehalten sind. Das geschmolzene Bauteile-Material steigt seitlich an dem Verbindungselement 10 hoch und dringt in die umlaufende Nut 10.51 an der Unterseite des Kopfes 10.5 hinein. Abschließend wird, mittels Drehung und axialen Druck, eine Stauchung des Schaftes 10.2-10.4 bewirkt, wodurch der Kopf 10.5 des Verbindungselements 10 in eine Endposition auf das erste Bauteil 12.1 gebracht wird (Fig. 7).

### Bezugszeichenliste

- 10: Verbindungselement
- 10.1: Längsachse des Verbindungselements
- 10.2: Schaftstirn des Verbindungselements
- 10.21: Schaftstirnfläche, Kontur der Schaftstirn
- 10.22: Einhüllende der Schaftstirnfläche oder Schaftstirn
- 10.23: Erhöhung, Wellenberg der Schaftstirnfläche oder Schaftstirn
- 10.24: Vertiefung, Wellental der Schaftstirnfläche oder Schaftstirn
- 10.3: Formabschnitt des Verbindungselements
- 10.31: Kontur des Formabschnitts
- 10.4: Halteabschnitt des Verbindungselements
- 10.41: Kontur des Halteabschnitts
- 10.5: Kopf des Verbindungselements
- 10.51: umlaufende Nut an der Unterseite des Kopfes
- 10.52: Drehmomentkoppler, radiale Nut an der Oberseite des Kopfes
- 10.53: Druckfläche an der Oberseite des Kopfes
- 12.1: erstes zu verbindendes Bauteil
- 12.2: zweites zu verbindendes Bauteil

## Patentansprüche

1. Verbindungselement (10) zum unlösbaren Verbinden von mindestens zwei Bauteilen (12.1, 12.2) mittels Reibschweißen beim Drehen des Verbindungselements (10) um eine Längsachse (10.1) des Verbindungselements (10), umfassend
- einen entlang der Längsachse (10.1) ausgebildeten Schaft (10.2-10.4) mit einer Schaftstirn (10.2) an einem freien Ende des Schaftes (10.2-10.4) zum Penetrieren mindestens eines Bauteils (12.1), und
- einen mit dem Schaft (10.2-10.4) verbundenen Kopf (10.5) zum Übertragen eines Drehmoments um die Längsachse (10.1) von einem Drehwerkzeug auf den Schaft (10.2-10.4),
wobei die Schaftstirn (10.2) eine Schaftstirnfläche (10.21) hat, die eine konvexe Einhüllende (10.22) mit einem stumpfen Verlauf aufweist,
wobei die Schaftstirnfläche (10.21) eine Mehrzahl von Vertiefungen und Erhöhungen aufweist, und
wobei die Schaftstirnfläche (10.21) derart ausgestaltet ist, dass die Schaftstirnfläche (10.21) bei dem Reibschweißen zum unlösbaren Verbinden von mindestens zwei Bauteilen (12.1, 12.2) kein Materialabfall erzeugt.

2. Verbindungselement (10) nach Anspruch 1, umfassend das folgende Merkmal:
- die Schaftstirnfläche (10.21) ist golfballartig ausgebildet.

3. Verbindungselement (10) nach einem der Ansprüche 1 oder 2, wobei die Einhüllende (10.22) der Schaftstirnfläche (10.21) in der Längsschnittebene einen runden oder bogenförmigen Umriss hat.

4. Verbindungselement (10) nach einem der vorhergehenden Ansprüche, umfassend mindestens eines der folgenden Merkmale:
- der Schaft (10.2-10.4) umfasst einen von dem freien Ende des Schaftes (10.2-10.4) ausgehenden Formabschnitt (10.3) und einen von dem Kopf (10.5) des Schaftes (10.2-10.4) ausgehenden Halteabschnitt (10.4);
- der Formabschnitt (10.3) weist in der Querschnittebene einen polygonförmigen Umriss (10.31) mit abgerundeten Ecken auf;
- der polygonförmige Umriss (10.31) des Formabschnitts (10.3) weist mindestens drei Ecken auf;
- ein Durchmesser des Halteabschnitts (10.4) ist größer als ein größter Durchmesser des Formabschnitts (10.3).

5. Verbindungselement (10) nach einem der vorhergehenden Ansprüche, wobei der Formabschnitt (10.3) in der Querschnittebene einen Umriss (10.31) hat, der bereichsweise abwechselnd geradlinig und bogenförmig ist.

6. Verbindungselement (10) nach einem der vorhergehenden Ansprüche, umfassend mindestens eines der folgenden Merkmale:
- jeweils ein ebener Flächenabschnitt des Formabschnitts (10.3) ist polygonförmig ausgebildet, wobei jeweils ein Polygon vorzugsweise drei oder viereckig ausgebildet ist;
- die Außenfläche des Formabschnitts (10.3) ist um die Längsachse in Umfangsrichtung des Formabschnitts (10.3) profiliert;
- die Außenfläche des Formabschnitts (10.3) ist tripolygonal ausgebildet;
- die Außenfläche des Formabschnitts (10.3) i) weist radiale Rillen, Kerben oder Vertiefungen auf oder ii) ist glatt ausgebildet.

7. Verbindungselement (10) nach einem der vorhergehenden Ansprüche, umfassend mindestens eines der folgenden Merkmale:
- der Halteabschnitt (10.4) ist zylinderförmig oder näherungsweise zylinderförmig oder konisch und insbesondere eine Außenfläche des Halteabschnitts (10.4) ist glatt ausgebildet;
- ein Übergang zwischen i) der Schaftstirn (10.2) und dem Formabschnitt (10.3) und/oder ii) zwischen dem Formabschnitt (10.3) und dem Halteabschnitt (10.4) ist abgerundet ausgebildet.

8. Verbindungselement (10) nach einem der vorhergehenden Ansprüche, umfassend mindestens eines der folgenden Merkmale:
- eine dem Schaft (10.2-10.4) zugewandte Unterseite des Kopfes (10.5) weist eine umlaufende Nut (10.51) auf;
- eine dem Schaft (10.2-10.4) abgewandte Oberseite des Kopfes (10.5) weist einen Drehmomentkoppler (1 0.52) auf zum Übertragen des Drehmoments von dem Drehwerkzeug auf den Kopf (10.5);
- der Drehmomentkoppler (10.52) umfasst eine Vielzahl radialer Nuten, Einbuchtungen oder Erhebungen.

9. Verbindungselement (10) nach einem der vorhergehenden Ansprüche, umfassend mindestens eines der folgenden Merkmale:
- das Verbindungselement (10) ist aus einer Stahllegierung ausgebildet, vorzugsweise aus einem Schrauben-Vergütungsmaterial, insbesondere 20MnB4;
- zumindest die Schaftstirnfläche (10.21) ist galvanisch verzinkt, wobei vorzugsweise eine Schicht eines Materials umfassend Zink oder eine Zink-Nickel Verbindung zumindest auf die Schaftstirnfläche (10.21) elektrochemisch aufgetragen ist;
- eine Länge des Formabschnitts (10.3) ist etwa zwei bis dreimal kleiner als eine Länge des Schafts (10.2-10.4).

10. Verbindungselement (10) nach einem der vorhergehenden Ansprüche, wobei das Verbindungselement (10), bis auf die Schaftstirnfläche (10.21), galvanisch beschichtet ist.

11. Verbundanordnung umfassend
- mindestens zwei Bauteile (12.1, 12.2) und
- mindestens ein Verbindungselement (10) nach einem der vorhergehenden Ansprüche durch welches die Bauteile (12.1, 12.2) mittels Reibschweißung unlösbar verbunden sind.

12. Verbundanordnung nach Anspruch 11, umfassend mindestens eines der folgenden Merkmale:
- ein jeweiliges Bauteil (12.1, 12.2) ist aus einem Metall oder einer Metalllegierung ausgebildet;
- mindestens eines der Bauteile (12.1, 12.2), insbesondere mindestens ein erstes (12.1) von dem Verbindungselement (10) durchdrungenes Bauteil, ist aus einem Material ausgebildet, das ein nicht eisenhaltiges Metall, vorzugsweise Kupfer, Aluminium oder Messing umfasst und/oder eine gegenüber dem Verbindungselement (10) geringere Materialhärte aufweist,
- mindestens eines der nicht als erste Bauteile (12.2) angeordneten Bauteile ist aus Stahl ausgebildet;
- eine Gesamtdicke der Bauteile (12.1, 12.2) ist höchstens so groß wie eine Länge des Haltebereichs des Verbindungselements (10).

## Claims

1. Connecting element (10) for non-detachably connecting at least two components (12.1, 12.2) by means of friction welding when rotating the connecting element (10) about a longitudinal axis (10.1) of the connecting element (10), comprising
- a shaft (10.2-10.4) formed along the longitudinal axis (10.1) with a shaft end (10.2) at a free end of the shaft (10.2-10.4) for penetrating at least one component (12.1), and
- a head (10.5) connected to the shaft (10.2-10.4) for transmitting a torque about the longitudinal axis (10.1) from a turning tool to the shaft (10.2-10.4),
wherein the shaft end (10.2) has a shaft end face (10.21) that has a convex envelope (10.22) with an obtuse profile,
wherein the shaft end face (10.21) has a plurality of depressions and elevations , and
wherein the shaft end face (10.21) is configured such that the shaft end face (10.21) does not generate material waste during friction welding for non-detachably joining at least two components (12.1, 12.2).

2. Connecting element (10) according to claim 1, comprising the following feature:
- the shaft end face (10.21) is golf ball-shaped.

3. Connecting element (10) accoridng to any one of claims 1 or 2, wherein the envelope (10.22) of the shaft end face (10.21) has a round or arcuate outline in the longitudinal section plane.

4. Connecting element (10) according to any one of the preceding claims, comprising at least one of the following features:
- the shaft (10.2-10.4) comprises a shaping portion (10.3) extending from the free end of the shaft (10.2-10.4) and a holding section (10.4) extending from the head (10.5) of the shaft (10.2-10.4);
- the shaping portion (10.3) has a polygonal outline (10.31) with rounded corners in the cross-sectional plane;
- the polygonal outline (10.31) of the shaping portion (10.3) has at least three corners;
- a diameter of the holding section (10.4) is larger than a largest diameter of the shaping portion (10.3).

5. Connecting element (10) according to any one of the preceding claims, wherein the shaping portion (10.3) has an outline (10.31) in the cross-sectional plane that is alternately rectilinear and arcuate in regions.

6. Connecting element (10) according to any one of the preceding claims, comprising at least one of the following features:
- in each case one flat surface section of the shaping portion (10.3) is polygonal in shape, in each case one polygon preferably being triangular or quadrangular in shape;
- the outer surface of the shaping portion (10.3) is profiled around the longitudinal axis in the circumferential direction of the shaping portion (10.3);
- the outer surface of the shaping portion (10.3) is tripolygonal;
- the outer surface of the shaping portion (10.3) i) has radial grooves, notches or depressions or ii) is smooth.

7. Connecting element (10) according to any one of the preceding claims, comprising at least one of the following features:
- the holding section (10.4) is cylindrical or approximately cylindrical or conical and in particular an outer surface of the holding section (10.4) is smooth;
- a transition between i) the shaft end (10.2) and the shaping portion (10.3) and/or ii) between the shaping portion (10.3) and the holding section (10.4) is rounded.

8. Connecting element (10) according to any one of the preceding claims, comprising at least one of the following features:
- an underside of the head (10.5) facing the shaft (10.2-10.4) has a circumferential groove (10.51);
- an upper side of the head (10.5) facing away from the shaft (10.2-10.4) has a torque coupler (10.52) for transmitting the torque from the turning tool to the head (10.5);
- the torque coupler (10.52) comprises a plurality of radial grooves, indentations or protrusions.

9. Connecting element (10) according to any one of the preceding claims, comprising at least one of the following features:
- the connecting element (10) is made of a steel alloy, preferably a screw quenching and tempering material, in particular 20MnB4;
- at least the shaft end face (10.21) is electrogalvanized, wherein preferably a layer of a material comprising zinc or a zinc-nickel compound is electrochemically applied at least to the shaft end face (10.21);
- a length of the shaping portion (10.3) is about two to three times smaller than a length of the shaft (10.2-10.4).

10. Connecting element (10) according to any one of the preceding claims, wherein the connecting element (10) is electroplated except for the shaft end face (10.21).

11. Composite arrangement comprising
- at least two components (12.1, 12.2) and
- at least one connecting element (10) according to one of the preceding claims by which the components (12.1, 12.2) are non-detachably connected by means of friction welding.

12. Composite arrangement accorditng to claim 11, comprising at least one of the following features:
- a respective component (12.1, 12.2) is formed from a metal or a metal alloy;
- at least one of the components (12.1, 12.2), in particular at least a first component (12.1) penetrated by the connecting element (10), is formed from a material comprising a non-ferrous metal, preferably copper, aluminum or brass, and/or has a lower material hardness than the connecting element (10);
- at least one of the components not arranged as first components (12.2) is made of steel;
- a total thickness of the components (12.1, 12.2) is at most as great as a length of the holding area of the connecting element (10).

## Revendications

1. Elément de liaison (10) pour relier de manière indissociable au moins deux composants (12.1, 12.2) par soudage par friction lors de la rotation de l'élément de liaison (10) autour d'un axe longitudinal (10.1) de l'élément de liaison (10), comprenant
- une tige (10.2-10.4) formée le long de l'axe longitudinal (10.1) avec une face de tige (10.2) à une extrémité libre de la tige (10.2-10.4) pour pénétrer au moins un composant (12.1), et
- une tête (10.5) reliée à la tige (10.2-10.4) pour transmettre un couple de rotation autour de l'axe longitudinal (10.1) d'un outil de tournage à la tige (10.2-10.4),
la face de tige (10.2) ayant une surface frontale de la tige (10.21) qui présente une enveloppe convexe (10.22) avec un tracé obtus,
dans lequel la surface frontale de la tige (10.21) présente une pluralité de creux et de bosses , et
la surface frontale de la tige (10.21) étant configurée de telle sorte que la surface frontale de la tige (10.21) ne génère pas de déchets de matériau lors du soudage par friction pour l'assemblage indissociable d'au moins deux composants (12.1, 12.2).

2. Elément de liaison (10) selon la revendication 1, comprenant la caractéristique suivante :
- la surface frontale de la tige (10.21) a la forme d'une balle de golf.

3. Elément de liaison (10) selon l'une des revendications 1 ou 2, dans lequel l'enveloppe (10.22) de la surface frontale de la tige (10.21) présente un contour rond ou arqué dans le plan de coupe longitudinal.

4. Elément de liaison (10) selon l'une des revendications précédentes, comprenant au moins l'une des caractéristiques suivantes :
- la tige (10.2-10.4) comprend une section de moulage (10.3) partant de l'extrémité libre de la tige (10.2-10.4) et une section de maintien (10.4) partant de la tête (10.5) de la tige (10.2-10.4) ;
- la section de moulage (10.3) présente, dans le plan de la section transversale, un contour polygonal (10.31) avec des coins arrondis ;
- le contour polygonal (10.31) de la section de moulage (10.3) présente au moins trois coins ;
- un diamètre de la section de maintien (10.4) est supérieur à un diamètre maximal de la section de moulage (10.3).

5. Elément de liaison (10) selon l'une quelconque des revendications précédentes, dans lequel la section de moulage (10.3) présente, dans le plan de la section transversale, un contour (10.31) qui est alternativement rectiligne et arqué par endroits.

6. Elément de liaison (10) selon l'une des revendications précédentes, comprenant au moins l'une des caractéristiques suivantes :
- une section de surface plane respective de la section de moulage (10.3) est réalisée en forme de polygone, un polygone respectif étant de préférence réalisé sous forme de trois ou quatre angles ;
- la surface extérieure de la section de moulage (10.3) est profilée autour de l'axe longitudinal dans la direction circonférentielle de la section de moulage (10.3) ;
- la surface extérieure de la section de moulage (10.3) est tripolygonale ;
- la surface extérieure de la section de moulage (10.3) i) présente des rainures, des encoches ou des creux radiaux, ou ii) est lisse.

7. Elément de liaison (10) selon l'une des revendications précédentes, comprenant au moins l'une des caractéristiques suivantes :
- la section de maintien (10.4) est de forme cylindrique ou approximativement cylindrique ou conique et, en particulier, une surface extérieure de la section de maintien (10.4) est lisse ;
- une transition entre i) la face de la tige (10.2) et la section de moulage (10.3) et/ou ii) entre la section de moulage (10.3) et la section de maintien (10.4) est réalisée arrondie.

8. Elément de liaison (10) selon l'une des revendications précédentes, comprenant au moins l'une des caractéristiques suivantes :
- une face inférieure de la tête (10.5), tournée vers la tige (10.2-10.4), présente une rainure périphérique (10.51) ;
- une face supérieure de la tête (10.5) opposée à la tige (10.2-10.4) présente un coupleur de couple (10.52) pour transmettre le couple de rotation de l'outil de tournage à la tête (10.5) ;
- le coupleur de couple (10.52) comprend une pluralité de rainures, d'encoches ou de saillies radiales.

9. Elément de liaison (10) selon l'une des revendications précédentes, comprenant au moins l'une des caractéristiques suivantes :
- l'élément de liaison (10) est réalisé en un alliage d'acier, de préférence en un matériau de trempe et de revenu pour vis, en particulier en 20MnB4 ;
- au moins la surface frontale de la tige (10.21) est galvanisée, une couche d'un matériau comprenant du zinc ou un composé zinc-nickel étant de préférence appliquée par voie électrochimique au moins sur la surface frontale de la tige (10.21) ;
- une longueur de la section de moulage (10.3) est environ deux à trois fois inférieure à une longueur de la tige (10.2-10.4).

10. Elément de liaison (10) selon l'une des revendications précédentes, dans lequel l'élément de liaison (10) est revêtu par électrolyse, à l'exception de la surface frontale de la tige (10.21).

11. Ensemble composite comprenant
- au moins deux composants (12.1, 12.2) et
- au moins un élément de liaison (10) selon l'une des revendications précédentes par lequel les composants (12.1, 12.2) sont reliés de manière inamovible par soudage par friction.

12. Ensemble composite selon la revendication 11, comprenant au moins l'une des caractéristiques suivantes :
- un composant respectif (12.1, 12.2) est réalisé en un métal ou en un alliage métallique ;
- au moins l'un des composants (12.1, 12.2), en particulier au moins un premier composant (12.1) traversé par l'élément de liaison (10), est réalisé en un matériau qui comprend un métal non ferreux, de préférence du cuivre, de l'aluminium ou du laiton et/ou qui présente une dureté de matériau inférieure à celle de l'élément de liaison (10) ;
- au moins l'un des composants qui ne sont pas disposés en tant que premiers composants (12.2) est réalisé en acier ;
- une épaisseur totale des composants (12.1, 12.2) est au maximum aussi grande qu'une longueur de la zone de retenue de l'élément de liaison (10).
